# EUROPEAN PATENT SPECIFICATION

(11) **EP 4 067 080 B1**
(45) Date of publication and mention of the grant of the patent: **27.08.2025**
(21) Application number: 22163863.8
(22) Date of filing: 23.03.2022
(51) Int. Cl.: B32B 37/12, B32B 7/00, B32B 5/00, B32B 3/26, B32B 5/18, B32B 15/082, B32B 15/20, B32B 27/06, B32B 27/30, F16F 1/373

(54) **METHOD FOR ATTACHING A VIBRATION DAMPING LAYER**
VERFAHREN ZUM ANBRINGEN EINER SCHWINGUNGSDÄMPFENDEN SCHICHT
PROCÉDÉ DE FIXATION D'UNE COUCHE D'AMORTISSEMENT DE VIBRATION

(30) Priority: 25.03.2021 NL 2027835
(43) Date of publication of application: 05.10.2022
(73) Proprietor: Acoustics & Noisereduction B.V., 1704 RW Heerhugowaard (NL)
(72) Inventor: KLAVER, Gijsbert, 1721 DX Broek op Langedijk (NL)
(74) Representative: Dogio Patents B.V.

(56) References cited:
- EP-A1- 1 777 435
- CN-A- 112 248 578
- GB-A- 2 277 710
- US-B1- 10 032 466

## Description

The present invention relates to a method for attaching a vibration damping layer on a surface of a device, in which method the surface is provided with a viscoelastic layer and a further layer.

Vibrations which propagate via for example walls and floors can result in annoyances and damage to a device. From GB 2,277,710 A a flexible acoustic attenuating material is known which comprises a pad of foamed synthetic resin material bonded on one face to a fire-resistant facing sheet, the sheet for instance comprising aluminium foil reinforced with a glass textile strand scrim, via an acoustically dense thermoplastic barrier layer, said pad being coated on the opposite side with a backing layer of a flexible but sensibly non-extensible fabric material. This known flexible acoustic attenuating material may be used to line ducts, may be wrapped around duct work and may be used to deaden sound transmission from operating machinery for example, by lining a compartment in which such machinery is located.

It is also known to attach a vibration damping layer by first applying a paste of a polyurethane polymer onto the surface, letting it cure to a viscoelastic layer, and subsequently covering it with a further layer.

However, this is a time-consuming method.

It is an object of the present invention to provide a method for attaching a vibration damping layer which is less time-consuming.

To this end, according to a first aspect, the invention provides a method for attaching a vibration damping layer on a surface of a device, in accordance with claim 1.

Thus, a vibration damping layer can be attached in a less time-consuming manner. The panels may be pre-manufactured and kept in storage, and can be attached as a unit onto the surface.

The viscoelastic layer has a vibration damping function and preferably has a thickness of between 0,5 mm and 5 mm, more preferably between 0,5 mm and 3 mm, and most preferably between 0,5 and 2 mm. The carrier layer has a thickness of between 1 mm and 3 mm.

The carrier layer forms a barrier between the viscoelastic layer and the surroundings, and is preferably between 1 mm and 3 mm thick.

The carrier layer is made from aluminium.

The side of the panel which faces away from the viscoelastic layer comprises an adhesive layer by means of which the panel is adhered onto the surface.

In this manner, even more time may be saved when attaching the vibration damping layer, as it is not necessary to attach an adhesive layer onto the surface of the panel *in situ* before the panel is attached to the surface.

During transport and storage of the panel the adhesive is preferably covered with a release liner which is removed prior to attaching the panel on the surface.

Typically, a panel will have a width of between 10 cm to 40 cm, and a length in the range of 10 cm to 240 cm, the length always being greater than the width.

A panel has for example dimensions of 20 cm by 30 cm, and in practice more than one panel will be adhered to the surface. This is especially advantageous when a relatively large surface is to be provided with a vibration damping layer, as relatively small panels are easier to handle and thus are more easily attached.

The vibrations may for example be caused by road or rail traffic and propagate via constructions such as bridges, but may also be caused by wind acting on the device.

The viscoelastic layer typically comprises or is made of copolymer acrylate, but may additionally or instead comprise or be made of a natural rubber and/or a synthetic rubber.

The panel comprises a spacing layer, wherein the viscoelastic layer is disposed between the carrier layer and the spacing layer, and wherein the panel is adhered against the surface with the carrier layer facing away from the surface.

The viscoelastic layer is arranged on the spacing layer and facilitates mounting of the panel on the surface. The spacing layer is preferably between 4 mm and 20 mm thick. The spacing layer is made from a material which is relatively rigid with respect to the viscoelastic layer, such as for example triplex. More preferably, the spacing layer is made from a bendable material.

The spacing layer is a foam with closed-cell structure.

Such a foam has a relatively low density. This results in the panel being relatively light-weight, and therefore easier to attach.

The foam has a density of 20 - 200 kg/m³.

Such a density in particular has a good relation between the relative rigidity with respect to the viscoelastic layer and the density of the foam.

Preferably, the foam has a density of 30 - 160 kg/m³, more preferably a density of 35 - 120 kg/m³, and most preferably a density of 40 - 80 kg/m³.

Examples of foams that may be used are polyvinylchloride (PVC), polyisocyanurate (PIR), polyurethane (PUR) and expanded polystyrene (EPS). Preferably the foam is a fire-resistant foam.

The carrier layer is made from a bendable material, wherein the side of the carrier layer is the front side and the side of the spacing layer is the rear side, wherein the spacing layer is provided with a plurality of parallel grooves, which grooves
- extend from the rear side towards the viscoelastic layer, and
- extend from a first side edge of the panel up to and on a further side edge of the panel. Such grooves, which are typically formed as cut-outs, may for instance each have a width in the range of 2 - 40 mm, e.g. 5 - 2 mm, and a depth in the range of 1 - 20 mm, e.g. 7-10 mm.

In this manner, the vibration damping layer can be attached to a curved surface more easily and faster, as the grooves or cut-outs in the panel allow the panel to be bend more easily and thus follow a shape of the curved surface. This allows the panel to better connect to a curved surface, which improves the vibration damping function on a curved surface. Preferably, the cut-outs run parallel to a circumferential side of the panel. A distance between two grooves or cut-outs is generally less than 10 cm, preferably less than 5 cm, and more preferably less than 3 cm.

An advantageous embodiment has as a special feature that the grooves are first grooves, and the spacing layer comprises second grooves which
- extend from the rear side towards the viscoelastic layer, and
- are at an angle to the first grooves.

In this manner, the vibration damping layer can be attached even faster and more easily to a non-planar surface, such as a surface that is bend in two directions, as the panel, due to the second grooves or cut-outs, can be bend more easily and in more directions. An example of such a surface is the hull of a ship.

A distance between two grooves or cut-outs is generally less than 10 cm, preferably less than 5 cm, and more preferably less than 3 cm, wherein the distance between first grooves or cut-outs and the distance between second grooves or cut-outs may be the same or different. For example, the first and second grooves may intersect to form a square pattern, with for instance each groove being between 4 mm and 15 mm deep and between 1 mm and 10 mm wide.
The angle between the first and second grooves or cut-outs is for example 45 degrees or 90 degrees.

An advantageous embodiment has as a special feature that the device is a bridge, and the surface is a surface of a girder of a bridge.

In this manner, vibrations caused by traffic driving over the bridge may be damped. Noise caused by traffic driving over the bridge is thereby reduced and noise nuisance is decreased.

An advantageous embodiment has as a special feature that the device comprises an apparatus which, during operation of the device, can produce vibrations that can propagate across the surface.

Apparatuses such as a motor in a building or ship can cause vibrations which may propagate via for example walls and floors. Such vibrations may result in annoyance and damage, making it desirable to dampen these vibrations.

An advantageous embodiment has as a special feature that the panel comprises a first circumferential side and a second circumferential side, and wherein a first panel with the first circumferential side is attached to the surface against the second circumferential side of a second panel.

In this manner, damping of vibrations is improved, and the panels may have a fire-resistant function besides a vibration damping function. In case it is desirable that the panels have a fire-resistant function, the spacing layer is preferably made from PVC.

An advantageous embodiment has as a special feature that the surface is an upright wall.

The invention facilitates attaching the viscoelastic layer onto a non-horizontal surface. According to an important use this surface is a part of a ship selected from i) a wall of a cabin and ii) an inner side of a hull of the ship.

Finally, the present invention relates to a panel according to any one of claims 12-14, for attaching a vibration damping layer on a surface of a device.

Such a panel is intended to be used for use with the method according to the invention.

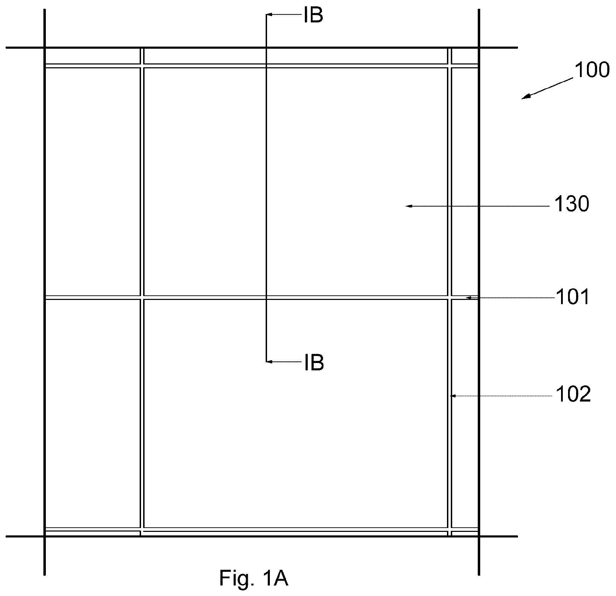

The present invention shall now be illustrated by means of the drawings, in which
Fig. 1A shows a part of a rear side of panel; and

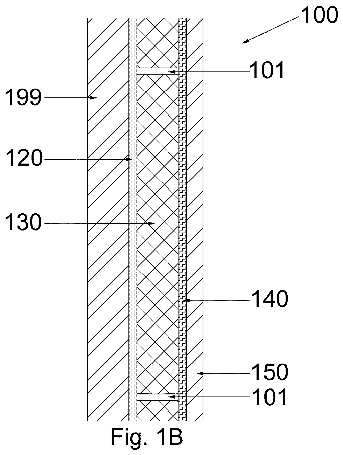

Fig. 1B shows a cross-section through the panel of Fig. 1A.

Fig. 1A schematically shows the rear side of a part of a panel 100 of 20 cm x 30 cm according to the invention. The panel 100 is adhered with this rear side on a surface 199 of which vibrations are to be damped. The rear side of the panel 100 consists of a spacing layer 130 of a polyvinylchloride- (PVC-) foam in which first grooves 101 and second grooves 102 are provided. The foam has a density of 60 kg/m³. The first grooves 101 extend parallel to each other and at a mutual distance of 3 cm from a first side edge up to and on a second side edge (not shown) which lies opposite to the first side edge. The first grooves 101 extend from the rear side towards a viscoelastic layer 140 (see Fig. 1B). The first grooves 101 open when the panel 100 is adhered on a concave surface 199, allowing the panel 100 to be bend and follow the surface 199 onto which it is adhered. When the panel 100 is adhered onto a convex surface 199, the first grooves 101 close.

The spacing layer 130 is also provided with second grooves 102 which are at an angle of 90 degrees to the first grooves 101, and which also extend from the rear side towards the viscoelastic layer 140. The second grooves 102 open and close respectively in a same manner as the first grooves 101, allowing the panel 100 to even better follow the surface 199 if it is bend in two directions.

Fig. 1B shows a schematical cross-section of a panel 100 according to the invention along the line IB-IB as shown in Fig. 1A after it has been adhered with its rear side on a surface 199 of a device. The cross-section shows the surface 199 of the device, here a wall of a ship, onto which the panel has been adhered by means of an adhesive layer 120 of an acrylate adhesive of a transfer tape. On the front side of the adhesive layer 120 the PVC-foam spacing layer 130 is disposed which has a thickness of 6 mm, with 1 mm of the viscoelastic layer 140 on top thereof. Finally, on the front side of the viscoelastic layer 140 a bendable aluminium carrier layer 150 of 0,5 mm thick is disposed, which forms the front side of the panel 100.

## Claims

1. Method for attaching a vibration damping layer (140) on a surface (199) of a device, the method comprising
providing the surface (199) with a panel (100), the panel (100) comprising:
- a spacing layer (130);
- a viscoelastic layer (140), and
- a further layer in the form of a carrier layer (150) for the viscoelastic layer (140), wherein the carrier layer is made from aluminium;
wherein the viscoelastic layer (140) is disposed between the carrier layer (150) and the spacing layer (130);
**characterized in that**
the spacing layer (130) is a foam with a closed-cell structure, the foam having a density of 20 - 200 kg/m³, wherein the spacing layer has a thickness of between 4 mm and 20 mm,
the carrier layer (150) is made from a bendable material and wherein the side of the carrier layer (150) is the front side and the side of the spacing layer (130) is the rear side, wherein the spacing layer (130) is provided with a plurality of parallel grooves (101), which grooves (101)
- extend from the rear side towards the viscoelastic layer (140),
- extend from a first side edge of the panel (100) up to and on a further side edge of the panel, and
wherein the side of the panel (100) which faces away from the viscoelastic layer (140) comprises an adhesive layer (120) by means of which the panel (100) is adhered onto the surface (199), and
wherein according to the method, the panel (100), with side of the panel (100) which faces away from the viscoelastic layer (140), is adhered to the surface (199) such that the panel (100) is adhered against the surface with the carrier layer (150) facing away from the surface (199).

2. Method according to claim 1, wherein a distance between the grooves is less than 10 cm.

3. Method according to claim 1 or 2, wherein the grooves (101) are first grooves (101), and the spacing layer (130) comprises second grooves (102) which
- extend from the rear side towards the viscoelastic layer (140), and
- are at an angle to the first grooves (101),
preferably wherein a distance between the second grooves is less than 10 cm.

4. Method according to any one of the preceding claims, wherein the surface is a curved surface, and wherein the method comprising bending the panel to follow the shape of the curved surface.

5. Method according to any one of the preceding claims, wherein the surface (199) is an upright wall, preferably an upright wall of a ship or a building.

6. Method according to claim 5, wherein the device is a ship and wherein the surface (199) is part of the ship, the surface being selected from
i) a cabin wall; and
ii) a hull of the ship, preferably an inner side of the hull of the ship.

7. Method according to any one of claims 1-5, wherein the device is a bridge, and the surface (199) is a surface (199) of a girder of a bridge.

8. Method according to any one of the preceding claims, wherein the device comprises an apparatus, such as a motor in a ship or building, which, during operation of the device, can produce vibrations that can propagate across the surface (199).

9. Method according to any one of the preceding claims, wherein the foam with a closed-cell structure is a fire-resistant foam.

10. Method according to any one of the preceding claims, wherein the foam has a density of 40 - 80 kg/m³.

11. Method according to any one of the preceding claims, wherein the panel (100) comprises a first circumferential side and a second circumferential side, and wherein a first panel (100) with the first circumferential side is attached to the surface (199) against the second circumferential side of a second panel (100).

12. Panel adapted to provide a vibration damping layer (140) on a surface (199) of a device, wherein the panel (100) comprises
- a spacing layer (130),
- a viscoelastic layer (140), and
- a further layer in the form of a carrier layer (150) for the viscoelastic layer (140), wherein the carrier layer is made from aluminium;
wherein the viscoelastic layer (140) is located between the carrier layer (150) and the spacing layer (130), and
**characterized in that**
the spacing layer (130) is a foam with a closed-cell structure, the foam having a density of 20 - 200 kg/m³, wherein the spacing layer has a thickness of between 4 mm and 20 mm;
the panel is adapted to be adhered to the surface with a side of the panel which faces away from the viscoelastic layer such that the panel is adhered against the surface with the carrier layer facing away from the surface,
wherein the carrier layer (150) is made from a bendable material and wherein the side of the carrier layer (150) is the front side and the side of the spacing layer (130) is the rear side, wherein the spacing layer (130) is provided with a plurality of parallel grooves (101), which grooves (101)
- extend from the rear side towards the viscoelastic layer (140), and
- extend from a first side edge of the panel (100) up to and on a further side edge of the panel, and
wherein the side of the panel (100) which faces away from the viscoelastic layer (140) comprises an adhesive layer (120) by means of which the panel (100) is to be adhered onto the surface (199).

13. Panel according to claim 12, wherein
- the carrier layer forms a barrier between the viscoelastic layer and the surroundings and has a thickness of between 1 mm and 3 mm; and/or
- the viscoelastic layer is adapted for providing a vibration damping action and has a thickness of between 0,5 and 5 mm.

14. Panel according to claim 12 or 13, wherein
- the spacing layer is made from a fire-resistant foam with a closed-cell structure; and/or
- the viscoelastic layer comprises copolymer acrylate.

## Patentansprüche

1. Verfahren zum Anbringen einer schwingungsdämpfenden Schicht (140) auf einer Oberfläche (199) einer Vorrichtung, das Verfahren Folgendes umfassend:
Versehen der Oberfläche (199) mit einem Paneel (100), das Paneel (100) Folgendes umfassend:
- eine Abstandsschicht (130);
- eine viskoelastische Schicht (140) und
- eine weitere Schicht in der Gestalt einer Trägerschicht (150) für die viskoelastische Schicht (140), wobei die Trägerschicht aus Aluminium angefertigt ist;
wobei die viskoelastische Schicht (140) zwischen der Trägerschicht (150) und der Abstandsschicht (130) angeordnet ist;
**dadurch gekennzeichnet, dass**
die Abstandsschicht (130) ein Schaum mit einer geschlossenzelligen Struktur ist, wobei der Schaum eine Dichte von 20 bis 200 kg/m³ aufweist, wobei die Abstandsschicht eine Dicke zwischen 4 mm und 20 mm aufweist,
die Trägerschicht (150) aus einem biegsamen Material angefertigt ist und wobei die Seite der Trägerschicht (150) die Vorderseite ist und die Seite der Abstandsschicht (130) die Rückseite ist, wobei die Abstandsschicht (130) mit einer Vielzahl von parallelen Rillen (101) versehen ist, wobei die Rillen (101)
- sich von der Rückseite in Richtung der viskoelastischen Schicht (140) erstrecken,
- sich von einem ersten Seitenrand des Paneels (100) bis zu einem weiteren Seitenrand des Paneels und darauf erstrecken, und
wobei die Seite des Paneels (100), die der viskoelastischen Schicht (140) abgewandt ist, eine Klebstoffschicht (120) umfasst, mittels der das Paneel (100) auf die Oberfläche (199) geklebt wird, und
wobei nach dem Verfahren das Paneel (100) mit der Seite des Paneels (100), die der viskoelastischen Schicht (140) abgewandt ist, derartig an die Oberfläche (199) geklebt wird, dass das Paneel (100) gegen die Oberfläche geklebt wird, wobei die Trägerschicht (150) der Oberfläche (199) abgewandt ist.

2. Verfahren nach Anspruch 1, wobei ein Abstand zwischen den Rillen kleiner ist als 10 cm.

3. Verfahren nach Anspruch 1 oder 2, wobei die Rillen (101) erste Rillen (101) sind und die Abstandsschicht (130) zweite Rillen (102) umfasst, die
- sich von der Rückseite in Richtung der viskoelastischen Schicht (140) erstrecken und
- in einem Winkel zu den ersten Rillen (101) sind, wobei vorzugsweise ein Abstand zwischen den zweiten Rillen kleiner ist als 10 cm.

4. Verfahren nach einem der vorhergehenden Ansprüche, wobei die Oberfläche eine gekrümmte Oberfläche ist und wobei das Verfahren Biegen des Paneels umfasst, um der Gestalt der gekrümmten Oberfläche zu folgen.

5. Verfahren nach einem der vorhergehenden Ansprüche, wobei die Oberfläche (199) eine aufrechte Wand ist, vorzugsweise eine aufrechte Wand eines Schiffs oder eines Gebäudes.

6. Verfahren nach Anspruch 5, wobei die Vorrichtung ein Schiff ist und wobei die Oberfläche (199) Teil des Schiffs ist, wobei die Oberfläche aus Folgendem ausgewählt ist:
i) einer Kabinenwand; und
ii) einem Rumpf des Schiffs, vorzugsweise einer Innenseite des Rumpfs des Schiffs.

7. Verfahren nach einem der Ansprüche 1 bis 5, wobei die Vorrichtung eine Brücke ist und die Oberfläche (199) eine Oberfläche (199) eines Trägers einer Brücke ist.

8. Verfahren nach einem der vorhergehenden Ansprüche, wobei die Vorrichtung eine Einrichtung umfasst, wie beispielsweise einen Motor in einem Schiff oder Gebäude, der beim Betrieb der Vorrichtung Schwingungen erzeugen kann, die sich über die Oberfläche (199) ausbreiten können.

9. Verfahren nach einem der vorhergehenden Ansprüche, wobei der Schaum mit einer geschlossenzelligen Struktur ein feuerbeständiger Schaum ist.

10. Verfahren nach einem der vorhergehenden Ansprüche, wobei der Schaum eine Dichte von 40 bis 80 kg/m³ aufweist.

11. Verfahren nach einem der vorhergehenden Ansprüche, wobei das Paneel (100) eine erste Umfangsseite und eine zweite Umfangsseite umfasst, und wobei ein erstes Paneel (100) mit der ersten Umfangsseite gegen die zweite Umfangsseite eines zweiten Paneels (100) an der Oberfläche (199) angebracht wird.

12. Paneel, das eingerichtet ist, um eine schwingungsdämpfende Schicht (140) auf einer Oberfläche (199) einer Vorrichtung bereitzustellen, wobei das Paneel (100) Folgendes umfasst:
- eine Abstandsschicht (130),
- eine viskoelastische Schicht (140) und
- eine weitere Schicht in der Gestalt einer Trägerschicht (150) für die viskoelastische Schicht (140), wobei die Trägerschicht aus Aluminium angefertigt ist;
wobei die viskoelastische Schicht (140) zwischen der Trägerschicht (150) und der Abstandsschicht (130) angeordnet ist, und
**dadurch gekennzeichnet, dass**
die Abstandsschicht (130) ein Schaum mit einer geschlossenzelligen Struktur ist, wobei der Schaum eine Dichte von 20 bis 200 kg/m³ aufweist, wobei die Abstandsschicht eine Dicke zwischen 4 mm und 20 mm aufweist;
das Paneel eingerichtet ist, um mit einer Seite des Paneels an die Oberfläche geklebt zu werden, die derartig von der viskoelastischen Schicht abgewandt ist, dass das Paneel gegen die Oberfläche geklebt wird, wobei die Trägerschicht der Oberfläche abgewandt ist,
wobei die Trägerschicht (150) aus einem biegsamen Material angefertigt ist und wobei die Seite der Trägerschicht (150) die Vorderseite ist und die Seite der Abstandsschicht (130) die Rückseite ist, wobei die Abstandsschicht (130) mit einer Vielzahl von parallelen Rillen (101) versehen ist, wobei die Rillen (101)
- sich von der Rückseite in Richtung der viskoelastischen Schicht (140) erstrecken und
- sich von einem ersten Seitenrand des Paneels (100) bis zu einem weiteren Seitenrand des Paneels und darauf erstrecken, und
wobei die Seite des Paneels (100), die der viskoelastischen Schicht (140) abgewandt ist, eine Klebstoffschicht (120) umfasst, mittels der das Paneel (100) auf die Oberfläche (199) geklebt werden soll.

13. Paneel nach Anspruch 12, wobei
- die Trägerschicht eine Sperre zwischen der viskoelastischen Schicht und der Umgebung ausbildet und eine Dicke zwischen 1 mm und 3 mm aufweist; und/oder
- die viskoelastische Schicht zum Bereitstellen einer schwingungsdämpfenden Wirkung eingerichtet ist und eine Dicke zwischen 0,5 und 5 mm aufweist.

14. Paneel nach Anspruch 12 oder 13, wobei
- die Abstandsschicht aus einem feuerbeständigen Schaum mit einer geschlossenzelligen Struktur angefertigt ist; und/oder
- die viskoelastische Schicht Copolymer-Acrylat umfasst.

## Revendications

1. Procédé pour fixer une couche d'amortissement de vibrations (140) sur une surface (199) d'un dispositif, le procédé comprenant
le fait de munir la surface (199) d'un panneau (100), le panneau (100) comprenant :
- une couche d'espacement (130) ;
- une couche viscoélastique (140), et
- une couche supplémentaire sous la forme d'une couche de support (150) pour la couche viscoélastique (140), la couche de support étant en aluminium ;
la couche viscoélastique (140) étant disposée entre la couche de support (150) et la couche d'espacement (130) ; **caractérisé en ce que**
la couche d'espacement (130) est une mousse à structure cellulaire fermée, la mousse ayant une densité de 20 à 200 kg/m³, la couche d'espacement ayant une épaisseur comprise entre 4 mm et 20 mm,
la couche de support (150) étant constituée d'un matériau pliable et le côté de la couche de support (150) étant le côté avant et le côté de la couche d'espacement (130) étant le côté arrière, la couche d'espacement (130) étant pourvue d'une pluralité de rainures parallèles (101), lesquelles rainures (101)
- s'étendent de la face arrière vers la couche viscoélastique (140),
- s'étendent depuis un premier bord latéral du panneau (100) jusqu'à un autre bord latéral du panneau et sur celui-ci, et
le côté du panneau (100) qui est opposé à la couche viscoélastique (140) comprenant une couche adhésive (120) au moyen de laquelle le panneau (100) est collé sur la surface (199), et
selon le procédé, le panneau (100), avec le côté du panneau (100) qui est opposé à la couche viscoélastique (140), étant collé sur la surface (199) de telle sorte que le panneau (100) est collé contre la surface avec la couche de support (150) opposée à la surface (199).

2. Procédé selon la revendication 1, la distance entre les rainures étant inférieure à 10 cm.

3. Procédé selon la revendication 1 ou 2, les rainures (101) étant des premières rainures (101) et la couche d'espacement (130) comprenant des deuxièmes rainures (102) qui
- s'étendent depuis le côté arrière vers la couche viscoélastique (140) et
- sont inclinées par rapport aux premières rainures (101),
de préférence une distance entre les deuxièmes rainures étant inférieure à 10 cm.

4. Procédé selon l'une quelconque des revendications précédentes, la surface étant une surface courbe, et le procédé comprenant le pliage du panneau pour suivre la forme de la surface courbe.

5. Procédé selon l'une quelconque des revendications précédentes, la surface (199) étant une paroi verticale, de préférence une paroi verticale d'un navire ou d'un bâtiment.

6. Procédé selon la revendication 5, le dispositif étant un navire et la surface (199) faisant partie du navire, la surface étant choisie parmi
i) une paroi de cabine ; et
ii) une coque du navire, de préférence un côté intérieur de la coque du navire.

7. Procédé selon l'une quelconque des revendications 1 à 5, le dispositif étant un pont, et la surface (199) étant une surface (199) d'une poutre d'un pont.

8. Procédé selon l'une quelconque des revendications précédentes, le dispositif comprenant un appareil, tel qu'un moteur dans un navire ou un bâtiment, qui, pendant le fonctionnement du dispositif, peut produire des vibrations qui peuvent se propager à travers la surface (199).

9. Procédé selon l'une quelconque des revendications précédentes, la mousse à structure cellulaire fermée étant une mousse résistante au feu.

10. Procédé selon l'une quelconque des revendications précédentes, la mousse ayant une densité de 40 à 80 kg/m³.

11. Procédé selon l'une quelconque des revendications précédentes, le panneau (100) comprenant un premier côté périphérique et un deuxième côté périphérique, et un premier panneau (100) avec le premier côté périphérique étant fixé à la surface (199) contre le deuxième côté périphérique d'un deuxième panneau (100).

12. Panneau adapté pour fournir une couche d'amortissement de vibrations (140) sur une surface (199) d'un dispositif, le panneau (100) comprenant
- une couche d'espacement (130),
- une couche viscoélastique (140), et
- une couche supplémentaire sous la forme d'une couche de support (150) pour la couche viscoélastique (140), la couche de support étant en aluminium ;
la couche viscoélastique (140) étant située entre la couche de support (150) et la couche d'espacement (130), et
**caractérisé en ce que**
la couche d'espacement (130) est une mousse à structure cellulaire fermée, la mousse ayant une densité de 20 à 200 kg/m³, la couche d'espacement ayant une épaisseur comprise entre 4 mm et 20 mm ;
le panneau est adapté pour être collé à la surface avec un côté du panneau qui est opposé à la couche viscoélastique de telle sorte que le panneau est collé contre la surface avec la couche de support opposée à la surface,
la couche de support (150) étant constituée d'un matériau pliable et le côté de la couche de support (150) étant le côté avant et le côté de la couche d'espacement (130) étant le côté arrière, la couche d'espacement (130) étant pourvue d'une pluralité de rainures parallèles (101), lesquelles rainures (101)
- s'étendent depuis le côté arrière vers la couche viscoélastique (140) et
- s'étendent depuis un premier bord latéral du panneau (100) jusqu'à un autre bord latéral du panneau et sur celui-ci, et
le côté du panneau (100) qui est opposé à la couche viscoélastique (140) comprenant une couche adhésive (120) au moyen de laquelle le panneau (100) doit être collé sur la surface (199).

13. Panneau selon la revendication 12,
- la couche de support formant une barrière entre la couche viscoélastique et l'environnement et ayant une épaisseur comprise entre 1 mm et 3 mm ; et/ou
- la couche viscoélastique étant adaptée pour fournir une action d'amortissement des vibrations et ayant une épaisseur comprise entre 0,5 et 5 mm.

14. Panneau selon la revendication 12 ou 13,
- la couche d'espacement étant constituée d'une mousse à structure cellulaire fermée résistante au feu ; et/ou
- la couche viscoélastique comprenant un copolymère acrylate.
